# EUROPÄISCHE PATENTANMELDUNG

(11) **EP 0 893 215 A1**
(43) Veröffentlichungstag der Anmeldung: **27.01.1999**
(21) Anmeldenummer: 97112681.8
(22) Anmeldetag: 24.07.1997
(51) Int. Cl.: B27G 5/02, B23D 51/02

(54) **Einstellbare Sägevorrichtung**

(71) Anmelder: Cheng, Wen-Ho, Section 2, Taipei (TW)
(72) Erfinder: Cheng, Wen-Ho, Section 2, Taipei (TW)
(74) Vertreter: WALTHER, WALTHER & HINZ Patentanwälte

(57) **Zusammenfassung**

Gegenstand der Erfindung ist eine einstellbare Sägevorrichtung mit einem an einer Grundplatte (1) montierten, Tragelemente (23) aufweisenden Führungsrahmen (2), wobei die Tragelemente (23) eine Säge (S2) längsverschieblich halten und wobei der Führungsrahmen (2) gegenüber der Grundplatte (1) einstellbar schwenkbar gelagert ist, so daß die Säge (S2) ein auf der Grundplatte (1) befindliches Werkstück im eingestellten Winkel sägt. Eine Sägevorrichtung zu schaffen, deren Säge je nach Bedarf in einfacher Weise angewinkelt angeordnet werden kann und die zuverlässig in dieser Position verharrt, wird dadurch erreicht, daß der Führungsrahmen (2) ein U-förmiges, die Tragelemente (23) tragendes Glied (21) umfaßt, daß die Grundplatte (1) ein Loch (111) und eine Anzahl von äquidistant zur Mitte des Loches (111) angeordnete Erhöhungen (112) aufweist, daß das U-förmige Glied (21) schwenkbar auf der Grundplatte (1) montiert ist und daß das U-förmige Glied (21) ein Loch (212a) aufweist, in das eine Erhöhung (112) der Grundplatte (1) eingreift, um die Grundplatte (1) in dieser Position zu fixieren.

## Beschreibung

Die vorliegende Erfindung betrifft eine einstellbare Sägevorrichtung mit einem an einer Grundplatte montierten, Tragelemente aufweisenden Führungsrahmen, wobei die Tragelemente eine Säge längsverschieblich halten und wobei der Führungsrahmen gegenüber der Grundplatte einstellbar schwenkbar gelagert ist, so daß die Säge ein auf der Grundplatte befindliches Werkstück im eingestellten Winkel sägt.

Derartige Sägevorrichtungen werden vorzugsweise als Kappsäge und/oder zum Sägen von Gehrungen eingesetzt, da die schwenkbar gelagerte Säge in jedem beliebigen Winkel eingestellt werden kann, so daß das auf der Grundplatte aufliegende Werkstück entspechend dem eingestellten Winkel gesägt werden kann. In der Praxis hat sich herausgestellt, daß es ohne einen entsprechenden Anschlag schwierig ist, den jeweils gewünschten Winkel einzustellen. Selbst wenn es gelingt, den richtigen Winkel einzustellen, kommt es häufig vor, daß der Führungsrahmen verrutscht, noch bevor der eigentliche Sägevorgang abgeschlossen ist.

Davon ausgehend liegt der vorliegenden Erfindung liegt die Aufgabe zugrunde, eine einstellbare Sägevorrichtung zu schaffen, die je nach Bedarf in einfacher Weise angewinkelt angeordnet werden kann und zuverlässig in dieser Position verharrt.

Als technische Lösung dieser Aufgabe wird erfindungsgemäß vorgeschlagen, die Sägevorrichtung der eingangs genannten Art dahingehend weiter zu bilden, daß der Führungsrahmen ein U-förmiges, die Tragelemente tragendes Glied umfaßt, daß die Grundplatte ein Loch und eine Anzahl von äquidistant zur Mitte des Loches angeordnete Erhöhungen aufweist, daß das U-förmige Glied schwenkbar auf der Grundplatte montiert ist und daß das U-förmige Glied ein Loch aufweist, in das eine Erhöhung der Grundplatte eingreift, um die Grundplatte in dieser Position zu fixieren.

Eine nach dieser technischen Lösung ausgebildete Sägevorrichtung hat den Vorteil, daß die einzelnen Erhöhungen quasi in das Loch (212a) einrasten, so daß der gewünschte Winkel präzise eingestellt werden kann. Durch diese formschlüssige Verbindung zwischen der Grundplatte und dem Führungsrahmen wird auch ein späteres Verrutschen zuverlässig verhindert, so daß mit einer erfindungsgemäßen Sägevorrichtung ein sauberer und präziser Kapp- und/oder Gehrungsschnitt möglich ist. Dabei sind die einzelnen Erhöhungen so ausgewählt, daß die Säge in der in der Praxis üblichen Winkelstellung einstellbar ist.

Ein weiterer Vorteil der erfindungsgmäßen Sägevorrichtung besteht darin, daß sich diese Sägevorrichtung einfach zusammenzusetzen und verstauen läßt. Noch ein weiterer Vorteil besteht darin, daß diese Sägevorrichtung einfach zu bauen ist. Noch ein weiterer Vorteil besteht darin, daß diese Sägevorrichtung im Einsatz praktisch zu handhaben ist.

Durch die Anbringung einer Gradangabe nahe oder auf jeder Erhöhung ist es dem Benutzer in einfacher Weise möglich, die jeweilige Erhöhung dem entsprechenden Winkel zuzuordnen. Dies bedeutet, daß der gewünschte Winkel in einfacher Weise einstellbar ist, da die jeweilige Gradangabe leicht ablesbar ist.

In einer bevorzugten Weiterbildung weist das U-förmige Glied nahe dem Loch eine Öffnung auf, durch die die entsprechende Gradangabe ablesbar ist. Hierdurch wird die Handhabbarkeit der Sägevorrichtung und die Ablesbarkeit der jeweiligen Gradangabe weiter erleichtert.

In einer bevorzugten Weiterbildung ist auf jedem der nach oben ragenden Flansche ein ein vertikales Durchgangsloch aufweisendes Verbindungsstück montiert. Insgesamt also vier Verbindungsstücke. Diese Verbindungsstücke dienen der einfachen Montage von zwei paar vertikal verlaufender Stangen, die in einer bevorzugten Weiterbildung durch das jeweilige Verbindungsstück hindurchragen und mit ihrem unteren Ende in das U-förmige Glied eingreifen. In wiederum einer bevorzugten Weiterbildung dienen diese Stangen der Aufnahme der Tragelemente.

In einer bevorzugten Ausführungsform der erfindungsgemäßen Sägevorrichtung ist das U-förmige Glied mittels einem durch das Loch hindurchführenden Bolzen an der Grundplatte befestigt. Dies hat den Vorteil, daß das U-förmige Glied, und somit der Führungsrahmen, in gelöstem Zustand um diesen Bolzen schwenkbar ist und daß ein Anziehen des Bolzens oder dessen Mutter gleichzeitig den Führungsrahmen mit der Grundplatte verspannt, so daß ein späteres Verrutschen verhindert wird.

In einer anderen, bevorzugten Ausführungsform weist die Grundplatte zwei Seitenabschnitte auf, an denen eine nach oben ragende Flanke angebracht ist. Auf diesen nach oben ragenden Seitenabschnitten wird das Werkstück an den Flanken anliegend aufgelegt und kann so problemlos über das U-förmige Glied hinweggeführt werden, ohne an diesem anzustoßen. Die Flanken dienen als Anschlag für das Werkstück, so daß das auf den Seitenabschnitten und an den Flanken anliegende Werkstück präzise und dennoch leicht verschieblich geführt ist.

In einer anderen bevorzugten Ausführungsform ist an der Grundplatte ein Winkelelement angebracht, mit denen die Grundplatte verstärkt und stabilisiert wird.

In noch einer bevorzugten Ausführungsform umfaßt der Führungsrahmen zwei parallel verlaufende Stangen, an denen je ein Tragelement verschieblich gehalten ist. Hierdurch ist es möglich, die am Tragelement befestigte Säge in Abhängigkeit des zu sägenden Werkstückes höher oder niedriger einzustellen.

In einer bevorzugten Weiterbildung sind die vertikalen Stangen in einer vertikalen Nut des Tragelementes angebracht, die sich auf der Außenseite des jeweiligen Tragelementes befindet. Das heißt, das eigentliche Tragelement ist zwischen den beiden parallelen Stangen angeordnet. Hierdurch ist es in materialsparender Weise möglich, ein relativ kleines Tragelement zu schaffen, welches die Säge höhenverschieblich am Führungsrahmen hält.

Zur einfacheren Montage des Tragelementes weist dieses zwei Glieder auf.

In noch einer anderen, besonders bevorzugten Ausführungsform umfaßt die Säge ein oberes Stangenelement, ein parallel und unter dem oberen Stangenelement montiertes, mittleres Stangenelement und ein parallel und unter dem mittleren Stangenelement montiertes Sägeblatt, wobei das mittlere Stangenelement durch eine Öffnung der Tragelemente getragen und geführt wird, und wobei das Sägeblatt durch einen Schnitt in den Tragelementen ragt.

Eine derartig ausgebildete Säge hat den Vorteil, daß sie durch das mittlere Stangenelement längsverschieblich am Führungsrahmen gehalten wird, und daß durch die parallele Anordnung der beiden Stangenelemente und des Sägeblattes eine sehr stabile Säge entsteht, die die jeweiligen Druck- und Zugkräfte aufnimmt, ohne zu verkanten.

In einer anderen, bevorzugten Ausführungsform weisen die Tragelemente an ihrem oberen Teil eine Öffnung (zur Aufnahme des mittleren Stangenelementes) und/oder an ihrem unteren Teil einen Schlitz (zum Hindurchführen des Sägeblattes) auf. Hierdurch ist es möglich, die Säge längsverschieblich am Führungsrahmen zu befestigen und dennoch das Sägeblatt über die gesamte Länge der Säge zu erstrecken.

Weitere Vorteile der erfindungsgemäßen Sägevorrichtung ergeben sich aus der Beschreibung und aus der beigefügten Zeichnung. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. In der Zeichnung ist ein Ausführungsbeispiel einer erfindungsgemäßen Sägevorrichtung dargestellt, anhand dessen die Erfindung näher erläutert wird.
- Fig. 1: zeigt eine Explosionsdarstellung einer erfindungsgemäßen, einstellbaren Sägevorrichtung;
- Fig. 2: zeigt eine perspektivische Ansicht der Sägevorrichtung gemäß Fig. 1;
- Fig. 3: zeigt eine Seitenansicht der Sägevorrichtung gemäß Fig. 1, geschnittgen entlang Linie 3-3 in Fig. 2;
- Fig. 4: zeigt eine Draufsicht auf die Sägevorrichtung gemäß Fig. 1;

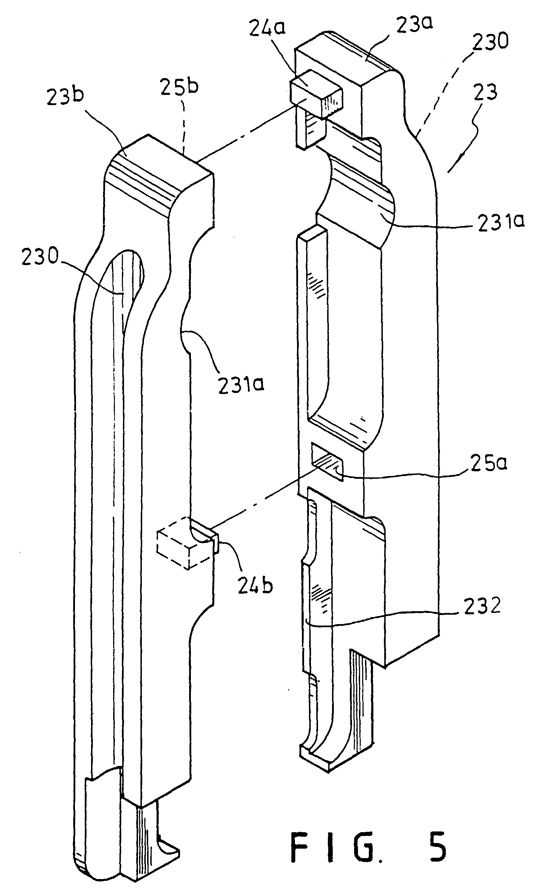

- Fig. 5: zeigt eine Explosionsdarstellung des Rahmenhalters der Sägevorrichtung gemäß Fig. 1;

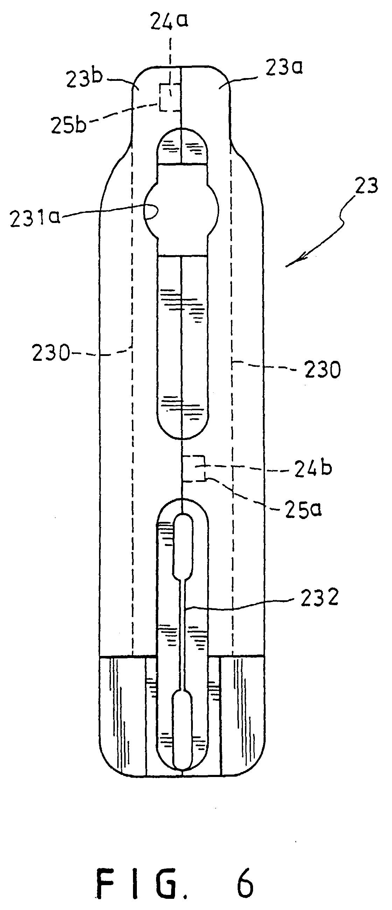

- Fig. 6: zeigt eine Vorderansicht des Rahmenhalters gemäß Fig. 5; und

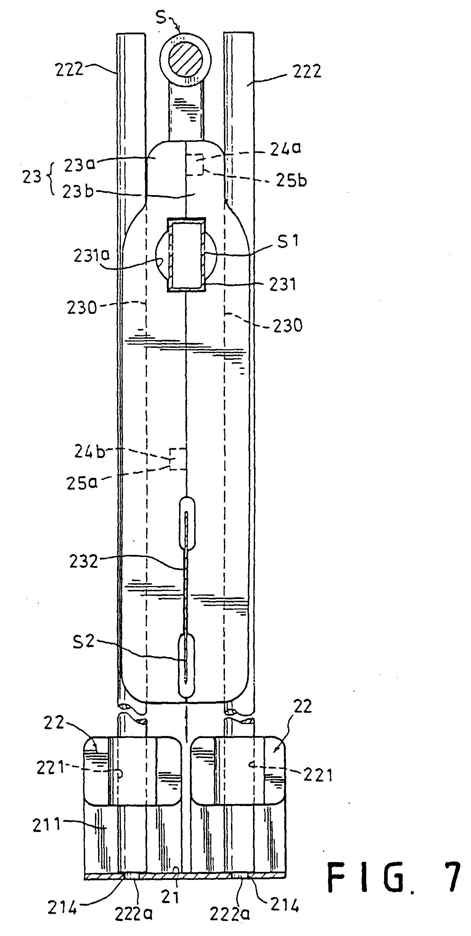

- Fig. 7: zeigt eine Seitenansicht des Rahmenhalters gemäß Fig. 5, geschitten entlang Linie 7-7 der Fig. 6.

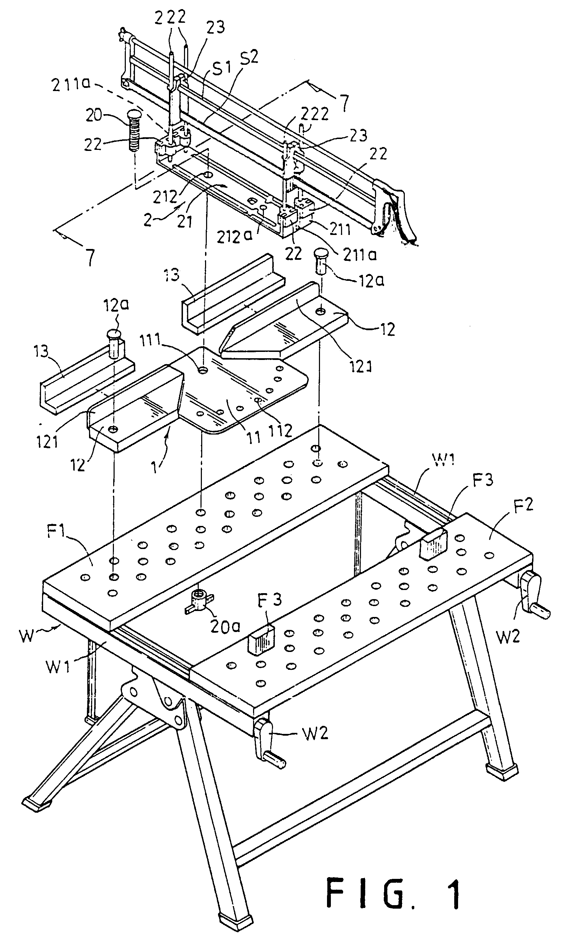

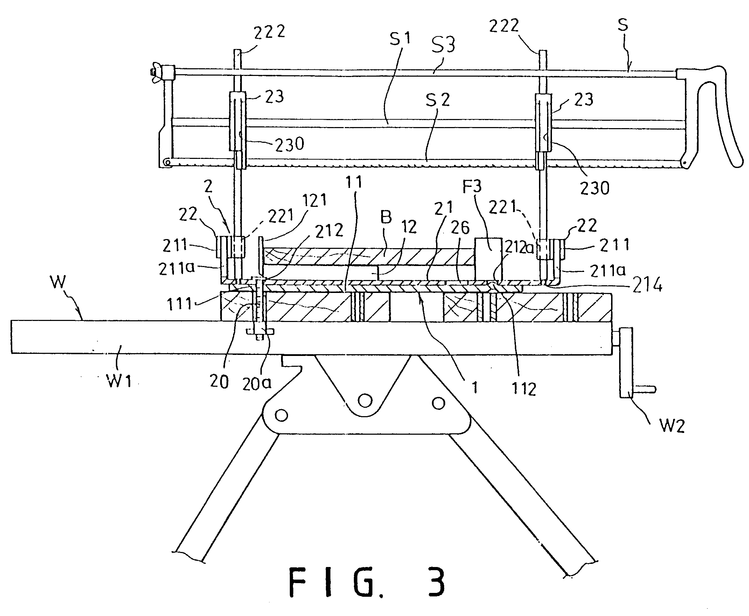

Wie der Zeichnung, insbesondere den Figuren 1, 2 und 3 zu entnehmen ist, enthält die einstellbare Sägevorrichtung gemäß der vorliegenden Erfindung im allgemeinen eine Grundplatte 1, einen Führungsrahmen 2 und eine Säge S. Die einstellbare Sägevorrichtung ist so ausgebildet, daß sie fest auf einen Arbeitstisch W montiert werden kann.

Der Arbeitstisch W enthält zwei zusammenklappbare Rahmen W1, zwischen welchen eine bewegliche Plattform F1 und eine stationär bleibende Plattform F2 montiert sind. Die bewegliche Plattform F1 ist mit zwei Griffen W2 verbunden, über die sie antreibbar ist. Auf der stationären Plattform F2 sind zwei Blöcke F3 fixiert. Der Arbeitstisch W kann jede bekannte Struktur gemäß dem Stand der Technik aufweisen und ist nicht Bestandteil der vorliegenden Erfindung.

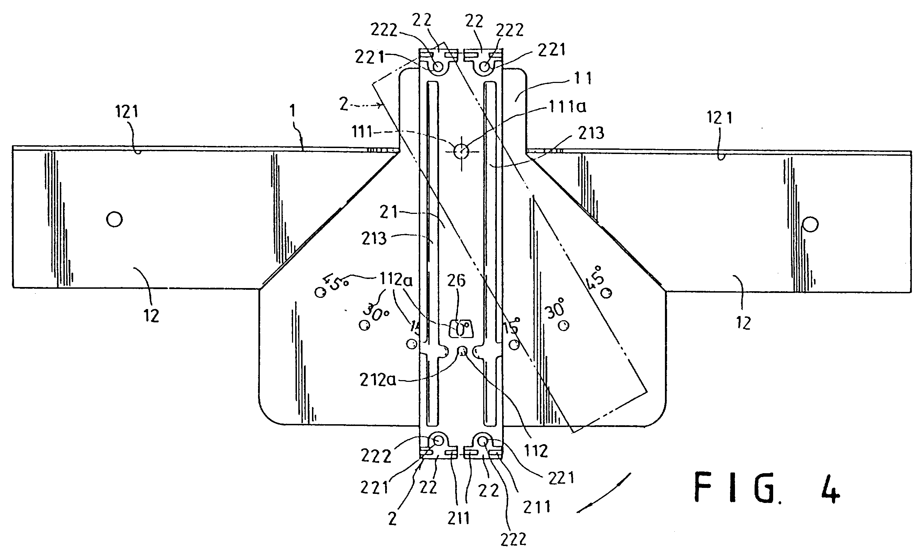

Die Grundplatte 1 enthält ein Positionierungsabschnitt 11 und zwei Seitenabschnitte 12, die sich jeweils auf einer Seite des Positionierungsabschnittes 11 befinden. Der Positionierungsabschnitt 11 weist ein Loch 111 auf und ist auf seiner oberen Seite mit einer Vielzahl von Erhöhungen 112 versehen, die alle äquidistant zum Zentrum 111a des Loches 111 angeordnet sind (siehe Fig. 4). An der Hinterseite des Seitenabschnittes 12 ist eine nach oben ragende Flanke 121 angeordnet. Die Grundplatte 1 ist fest an die bewegliche Plattform F1 des Arbeitstisches W mittels zwei Bolzen 12a angebracht, wobei die beiden Bolzen 12a durch die zwei Seitenabschnitte 12 und die bewegliche Plattform F1 hindurch ragen, um in eine (nicht abgebildete) Mutter einzugreifen.

Der Führungsrahmen 2 enthält ein U-förmiges Glied 21, dessen nach oben ragende Schenkel durch einen vertikal verlaufenden Schlitz 211a in je zwei Flansche 211 unterteilt ist. Das U-förmige Glied 21 ist mittels eines Bolzens 20 fest auf dem Positionsabschnitt 11 der Grundplatte 1 montiert. Der Bolzen 20 ragt nach unten durch ein Loch 212 in der Nähe eines Endes des U-förmigen Gliedes 21, durch das Loch 111 des Positionsabschnittes 11 der Grundplatte 1 und durch die bewegliche Plattform F1 des Arbeitstisches W hindurch, um in eine Mutter 20a einzugreifen. Das U-förmige Glied 21 ist in der Nähe seines anderen Endes mit einem Loch 212a zur Aufnahme einer der Erhöhungen 112 der Grundplatte 1 versehen, wodurch die Positionierung des U-förmigen Glieds 21 auf der Grundplatte 1 erleichtert wird.

An jedem nach oben ragenden Flansch 211 ist ein Verbindungsstück 22 mit einem vertikalen Durchgangsloch 221 angebracht, durch das eine vertikal verlaufende Stange 222 ragt. Das untere Ende der vertikalen Stange 222 hat einen kleineren Durchmesser und ist in ein Loch 214 des U-förmigen Gliedes 21 eingepaßt, so daß die vertikale Stange durch das U-förmige Glied 21 getragen wird. Ein Tragelement 23 ist verschieblich auf zwei vertikale Stangen 222 montiert, die jeweils an einem Ende des U-förmigen Gliedes 21 angebracht sind. Das Tragelement 23 beinhaltet ein erstes und ein zweites Glied 23a und 23b, die jeweils eine vertikale Nut 230 an ihrer Außenseite aufweisen, durch die eine vertikale Stange 222 verläuft. Das erste Glied 23a ist auf seiner Innenseite nahe am oberen Ende mit einem Zapfen 24a versehen, während das zweite Glied 23b eine Nut 25b zur Aufnahme des Zapfens 24a des ersten Glieds 23a aufweist. Das Tragelement 23 ist in seinem oberen Teil mit einer Öffnung 231a und in seinem unteren Teil mit einem Schlitz 232 versehen.

Die Säge besitzt ein oberes Stangenelement S3, ein parallel und unter dem oberen Stangenelement S3 montiertes, mittleres Stangenelement S1, und ein parallel und unter dem mittleren Stangenelement S1 angebrachtes Sägeblatt S2. Die Säge S greift in den Führungsrahmen 2 ein, so daß das mittlere Stangenelement S1 durch die Öffnungen 231a im oberen Teil der Tragelemente 23 gehalten und geführt wird, während das Sägeblatt S2 durch die Schlitze 232 im unteren Teil der Tragelemente 23 reicht. Folglich kann die Säge S zusammen mit den Tragelementen 23 entlang der vertikalen Stangen 222 auf und nieder bewegt werden.

Besteht nun der Wunsch, die Säge S in einem bestimmten Winkel einzustellen, so wird nur die Mutter 20a gelöst, das U-förmige Glied 21 im Verhältnis zur Grundplatte 1 so gedreht, daß das Loch 212a des U-förmigen Glieds 21 in eine Erhöhung 112 der Grundplatte 1 eingreift, und dann die Mutter 20a wieder angezogen.

Zur Bearbeitung wird das Werkstück (nicht abgebildet) zuerst auf die beiden Seitenabschnitte 12 der Grundplatte 1 gelegt. Dann wird der Griff W2 gedreht, wodurch sich die bewegliche Plattform F1 der stationären Plattform F2 nähert, bis das Werkstück zwischen den Flanken 121 der Grundplatte 1 und den fixierten Blöcken F3 der Werkbank W befestigt ist.

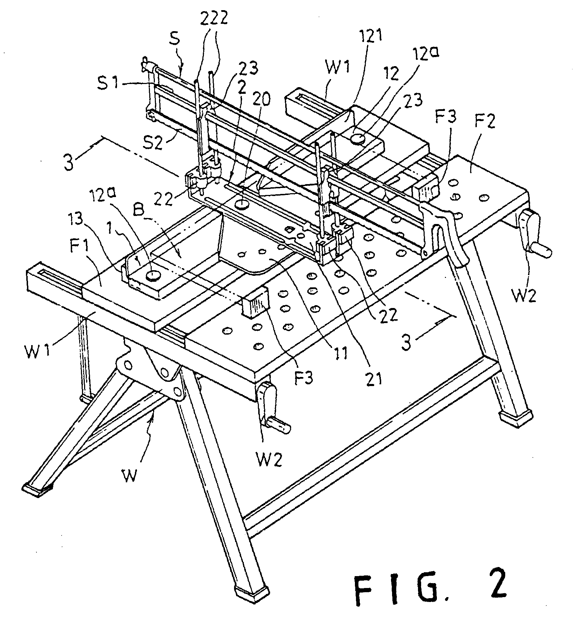

Wie aus Fig. 4 ersichtlich ist, wurden die Erhöhungen 112 mit einer Reihe von Gradangaben und das U-förmige Glied 21 mit einer Öffnung 26 versehen, durch welche der Winkel des U-förmigen Glieds 21 im Verhältnis zur Grundplatte 1 leicht festgestellt werden kann. Zur Verstärkung der Seitenabschnitte 12 der Grundplatte 1 kann ein Winkelelement 13 (siehe Figuren 1 und 2) auf die Grundplatte 1 montiert werden.

Jedes der oben beschriebenen Elemente oder eine Kombination von zwei oder mehreren davon können auch in Verfahrensweisen eingesetzt werden, die von der oben beschriebenen abweichen.

Obwohl bestimmte neuartige Merkmale dieser Erfindung gezeigt und beschrieben worden sind und in den anliegenden Ansprüchen ausgeführt werden, beschränkt sich diese Erfindung keineswegs auf die oben angeführten Einzelheiten, da vorausgesetzt wird, daß sowohl in der Form als auch in den Einzelheiten der dargestellten Vorrichtung und ihres Verfahrens verschiedene Unterlassungen, Änderungen usw. von Fachleuten vorgenommen werden können, ohne dadurch den Rahmen der vorliegenden Erfindung zu verlassen.

Ohne weitere Darlegung offenbart die vorstehende Beschreibung den Kern der vorliegenden Erfindung in solcher Weise, daß jeder, der mit dem Stand der Technik vertraut ist, diese verschiedentlich anwenden kann, ohne dabei Merkmale, die die wesentlichen Kennzeichen der Gattung oder besondere Aspekte der vorliegenden Erfindung gegenüber dem Stand der Technik darstellen, zu unterlassen.

## Patentansprüche

1. Einstellbare Sägevorrichtung mit einem an einer Grundplatte (1) montierten, Tragelemente (23) aufweisenden Führungsrahmen (2), wobei die Tragelemente (23) eine Säge (S2) längsverschieblich halten, und wobei der Führungsrahmen (2) gegenüber der Grundplatte (1) einstellbar schwenkbar gelagert ist, so daß die Säge (S2) ein auf der Grundplatte (1) befindliches Werkstück im eingestellten Winkel sägt,
**dadurch gekennzeichnet**,
daß der Führungsrahmen (2) ein U-förmiges, die Tragelemente (23) tragendes Glied (21) umfaßt, daß die Grundplatte (1) ein Loch (111) und eine Anzahl von äquidistant zur Mitte des Loches (111) angeordnete Erhöhungen (112) aufweist, daß das U-förmige Glied (21) schwenkbar auf der Grundplatte (1) montiert ist und daß das U-förmige Glied (21) ein Loch (212a) aufweist, in das eine Erhöhung (112) der Grundplatte (1) eingreift, um die Grundplatte (1) in dieser Position zu fixieren.

2. Sägevorrichtung nach Anspruch 1,
**dadurch gekennzeichnet**,
daß nahe oder auf jeder Erhöhung (112) eine entsprechende Gradangabe vorgesehen ist.

3. Sägevorrichtung nach Anspruch 2,
**dadurch gekennzeichnet**,
daß das U-förmige Glied (21) nahe dem Loch (212a) eine Öffnung (26) aufweist, durch die die entsprechende Gradangabe ablesbar ist.

4. Sägevorrichtung nach einem der vorangehenden Ansprüche,
**dadurch gekennzeichnet**,
daß die nach oben ragenden Schenkel des U-förmige Gliedes (21) durch einen vertikalen Schlitz (211a) in je zwei Flansche (211) unterteilt sind.

5. Sägevorrichtung nach Anspruch 4,
**gekennzeichnet durch**,
vier, ein vertikales Durchgangsloch (221) aufweisende Verbindungsstücke (22), die jeweils auf einem der nach oben ragenden Flansche (211) montiert sind.

6. Sägevorrichtung nach Anspruch 5,
**dadurch gekennzeichnet**,
daß der Führungsrahmen (2) zwei Paar vertikal verlaufende Stangen (222) umfaßt, die jeweils durch ein Verbindungsstück (22) hindurch ragen, wobei jede Stange (222) ein unteres Ende hat, das in das U-förmige Glied (21) eingreift.

7. Sägevorrichtung nach einem der vorangehenden Ansprüche,
**dadurch gekennzeichnet**,
daß das U-förmige Glied (21) mittels einem durch das Loch (212) hindurchführenden Bolzen (20) an der Grundplatte (1) befestigt ist.

8. Sägevorrichtung nach einem der vorangehenden Ansprüche,
**dadurch gekennzeichnet**,
daß die Grundplatte (1) zwei Seitenabschnitte (12) aufweist, an denen eine nach oben ragende Flanke (121) angebracht ist.

9. Sägevorrichtung nach einem der vorangehenden Ansprüche,
**gekennzeichnet durch**,
ein an der Grundplatte (1) angebrachtes Winkelelement (13).

10. Sägevorrichtung nach einem der vorangehenden Ansprüche,
**dadurch gekennzeichnet**,
daß der Führungsrahmen (2) zwei Paar parallel verlaufende Stangen (222) umfaßt, an denen je ein Tragelement (23) verschieblich gehalten ist.

11. Sägevorrichtung nach Anspruch 10,
**dadurch gekennzeichnet**,
daß jedes Tragelement (23) eine eine vertikale Nut (230) aufweisende Außenseite hat, in der jeweils eine vertikale Stange (222) verschieblich eingepasst ist.

12. Sägevorrichtung nach einem der vorangehenden Ansprüche,
**dadurch gekennzeichnet**,
daß jedes Tragelement (23) zwei Glieder (23a, 23b) aufweist.

13. Sägevorrichtung nach einem der vorangehenden Ansprüche,
**dadurch gekennzeichnet**,
daß die Säge (S) ein oberes Stangenelement (S3), ein parallel und unter dem oberen Stangenelement (S3) montiertes, mittleres Stangenelement (S1) und ein parallel und unter dem mittleren Stangenelement (S1) montiertes Sägeblatt (S2) umfaßt, wobei das mittlere Stangenelement (S1) durch eine Öffnung (231a) der Tragelemente (23) getragen und geführt wird, und wobei das Sägeblatt (S2) durch einen Schlitz (232) der Tragelemente (23) ragt.

14. Sägevorrichtung nach einem der vorangehenden Ansprüche,
**dadurch gekennzeichnet**,
daß die Tragelemente (23) an ihrem oberen Teil eine Öffnung (231a) und/oder an ihrem unteren Teil einen Schlitz (232) aufweisen.
